# FASCICULE DE BREVET EUROPEEN

(11) **EP 3 792 213 B1**
(45) Date de publication et mention de la délivrance du brevet: **04.05.2022**
(21) Numéro de dépôt: 20194183.8
(22) Date de dépôt: 02.09.2020
(51) Int. Cl.: B66F 9/075, B66F 11/04, B66F 17/00, B60G 9/02, B60G 17/005, B60G 17/0185, B60G 21/073

(54) **ESSIEU OSCILLANT POUR UN ENGIN DE LEVAGE, ENGIN DE LEVAGE COMPRENANT UN TEL ESSIEU ET PROCÉDÉ DE CONTRÔLE**
PENDELACHSE FÜR EINE HUBMASCHINE, EINE SOLCHE ACHSE UMFASSENDE HUBMASCHINE UND STEUERUNGSVERFAHREN
OSCILLATING AXLE FOR A LIFTING MACHINE, LIFTING MACHINE COMPRISING SUCH AN AXLE AND CONTROL METHOD

(30) Priorité: 03.09.2019 FR 1909665
(43) Date de publication de la demande: 17.03.2021
(73) Titulaire: Haulotte Group, 42420 Lorette (FR)
(72) Inventeur: SIMON, Alexandre, 42000 SAINT-ETIENNE (FR); COGNET, Rémy, 42320 LA GRAND CROIX (FR)
(74) Mandataire: Lavoix

(56) Documents cités:
- EP-A1- 0 890 462

## Description

La présente invention concerne un essieu oscillant pour un engin de levage, un engin de levage comportant un tel essieu, ainsi qu'un procédé de contrôle d'un tel engin de levage.

Les engins de levage tels que les nacelles élévatrices peuvent être équipés d'essieux oscillants, notamment décrits dans EP 1 414 733 ou CN 104528609, permettant de conserver le contact au sol sur des terrains irréguliers pour préserver la stabilité de l'engin. Ces essieux oscillants comprennent un pont sur lequel sont montées une roue à chaque extrémité, et des vérins reliant le châssis du véhicule et le pont. Les vérins peuvent être à double effet : en configuration de déplacement de la nacelle avec structure élévatrice abaissée, la translation du vérin est libre dans les deux sens, et l'essieu oscille librement ; en configuration d'élévation, la position des vérins est verrouillée et l'essieu est bloqué.

Les vérins peuvent également être de type simple effet, ce qui autorise une gestion additionnelle par rapport aux vérins double effet (blocage/déverrouillage de l'un ou l'autre des vérins et non plus des deux en même temps). En mode translation plateforme élevée, il devient ainsi possible, en cas d'évolution défavorable du dévers châssis, d'autoriser l'oscillation de l'essieu uniquement dans le sens stabilisant pour le châssis (retour vers la position dévers 0°). Ce mode bloque l'oscillation dans le sens aggravant et assure le contact permanent des quatre roues de l'engin avec le sol. Les bénéfices sont une bien meilleure adaptabilité de la machine aux variations de relief ainsi qu'une réduction significative du contrepoids châssis puisque les quatre roues gardent en permanence le contact avec le sol.

Le blocage des vérins est obtenu en emprisonnant le fluide hydraulique du circuit de contrôle des vérins au moyens d'électrovannes contrôlées par une unité de contrôle de l'engin. En cas de défaillance non détectée d'une de ces électrovannes, un vérin peut rester bloqué en configuration de déplacement au sol, engendrant une perte de contact d'une roue avec le sol. Dans une phase d'élévation, l'engin risque de se renverser si la charge de la plateforme ou le centre de gravité de l'engin se déplace vers la roue non en appui sur le sol.

C'est à ces inconvénients qu'entend remédier l'invention en proposant un nouvel essieu oscillant permettant de détecter les dysfonctionnements potentiellement dangereux pour la stabilité de l'engin de levage.

EP 0 890 462 A1 divulgue un essieu oscillant pour un engin de levage respectivement un procédé de contrôle d'un engin de levage selon les préambules des revendications indépendantes.

A cet effet, l'invention concerne un essieu oscillant pour un engin de levage, cet essieu comprenant :
un pont d'essieu aux extrémités duquel sont montées deux organes de liaison au sol;
un axe d'oscillation;
un vérin gauche et un vérin droit, chaque vérin ayant une tige en contact avec le pont et un corps fixé sur une partie fixe d'un châssis de l'engin de levage, le corps formant une chambre dans laquelle se déplace la tige,
un circuit hydraulique reliant entre elles les chambres des vérins gauche et droit, dans lequel est présent un fluide à une pression donnée, permettant de presser les tiges du vérin gauche et du vérin droit contre le pont;
au moins une électrovanne sur une branche du circuit hydraulique reliée à la chambre du vérin gauche, et au moins une électrovanne sur une branche du circuit hydraulique reliée à la chambre du vérin droit, chacune de ces électrovannes pouvant être positionnée dans une position ouverte, dans laquelle le fluide peut circuler librement, et une position fermée, dans laquelle le fluide est emprisonné dans la chambre du vérin correspondant.

Cet essieu est caractérisé en ce que chacune des chambres du vérin gauche et du vérin droit comporte un capteur de pression adapté pour mesurer la pression du fluide dans chacune des chambres, et en ce que des moyens de contrôle sont prévus pour détecter une pression dans l'une des chambres supérieure à un premier seuil, et/ou un différentiel entre les pressions dans chacune des chambres supérieur à un second seuil, de manière à détecter le blocage en position fermée d'une électrovanne, et à déclencher une procédure de sécurisation.

Grâce à l'invention, une défaillance d'une électrovanne bloquant en position un vérin est détectée et permet d'enclencher une procédure de sécurisation, et d'empêcher que l'engin de levage se trouve en situation instable au cours d'une opération de levage.

Selon des aspects avantageux mais non obligatoires de l'invention, un tel essieu oscillant peut incorporer une ou plusieurs des caractéristiques suivantes, prises dans toute combinaison techniquement admissible :
- Les moyens de contrôle sont configurés pour émettre un signal d'alerte à destination d'un opérateur ou aux alentours de l'engin de levage en cas de dépassement de l'un des seuils de pression.
- Les moyens de contrôle sont configurés pour inhiber certaines fonctionnalités de l'engin de levage.
- Les pressions dans les chambres des vérins sont détectées pendant une phase de roulage de l'engin de levage et préalablement à une phase d'élévation de l'engin de levage.

L'invention concerne également un engin de levage comportant au moins un essieu oscillant tel que mentionné ci-dessus.

L'invention concerne également un procédé de contrôle d'un engin de levage comportant au moins un essieu oscillant, cet essieu oscillant comprenant :
un pont d'essieu ayant une roue à chacune de ses extrémités,
un axe d'oscillation,
un vérin gauche et un vérin droit; chacun des vérins gauche et droit ayant une tige en contact avec le pont et un corps fixé sur un châssis de l'engin de levage, le corps formant une chambre dans laquelle se déplace la tige;
un circuit hydraulique reliant entre elles les chambres des vérins gauche et droit, dans lequel est présent un fluide à une pression donnée, permettant de presser les tiges du vérin gauche et du vérin droit contre le pont;
au moins une électrovanne sur une branche du circuit hydraulique reliée à la chambre du vérin gauche, et au moins une électrovanne sur une branche du circuit hydraulique reliée à la chambre du vérin droit, chacune de ces électrovannes pouvant être positionnée dans une position ouverte, dans laquelle le fluide peut circuler librement, et une position fermée, dans laquelle le fluide est emprisonné dans la chambre du vérin correspondant.

Ce procédé comporte une étape a) consistant à mesurer la pression du fluide dans chacune des chambres du vérin gauche et du vérin droit, une étape b) consistant à déterminer si la pression dans l'une des chambres est supérieure à un premier seuil, et/ou si un différentiel entre les pressions dans chacune des chambres est supérieur à un second seuil, signalant le blocage en position fermée d'une électrovanne, et c) à déclencher une procédure de sécurisation en cas de survenance de l'un des cas de l'étape b).

Selon des aspects avantageux mais non obligatoires de l'invention, un tel procédé de contrôle peut incorporer une ou plusieurs des caractéristiques suivantes, prises dans toute combinaison techniquement admissible :
- Les étapes a) et b) sont réalisées pendant une phase de roulage de l'engin de levage et préalablement à une phase d'élévation.
- A l'étape c), la procédure de sécurisation consiste au moins à : émettre un signal d'alerte à destination d'un opérateur ou aux alentours de l'engin de levage, ou inhiber certaines fonctionnalités de l'engin de levage.

L'invention sera mieux comprise et d'autres avantages de celle-ci apparaitront plus clairement à la lumière de la description qui va suivre d'un essieu oscillant, d'un engin de levage et d'un procédé de contrôle conformes à son principe, faite à titre d'exemple non limitatif en référence aux dessins annexés dans lesquels :
- [Fig 1] la figure 1 est une vue schématique d'un essieu oscillant conforme à l'invention;
- [Fig 2] la figure 2 est une vue schématique de l'essieu oscillant de la figure 1, dans une configuration de roulage sur sol irrégulier;
- [Fig 3] la figure 3 est une vue schématique de l'essieu oscillant de la figure 1, dans une configuration de défaillance.

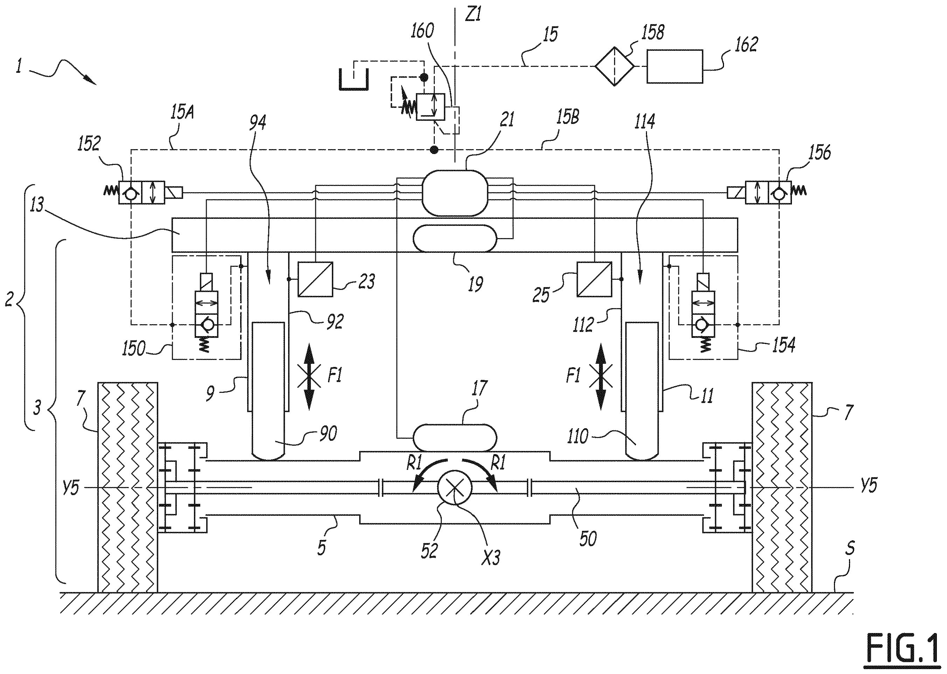

Les figures 1 à 3 représentent un engin de levage 1, tel qu'une nacelle élévatrice, comportant une partie basse comprenant un châssis 2 et des organes de liaison au sol, et une structure élévatrice non représentée, supportant une plateforme également non représentée. La structure élévatrice peut être du type comprenant des sections télescopiques et articulées, ou bien de types « ciseaux ».

Dans un exemple classique, la partie basse comporte quatre organes de liaison au sol formés par des roues 7. Le châssis 2 comprend une partie fixe 13 et au moins un essieu oscillant, dont un est représenté à la figure 1 avec la référence 3. Les roues 7 sont montées deux par deux sur les essieux. La partie fixe 13 est fixe par rapport à un axe vertical Z1 de l'engin de levage 1.

L'essieu oscillant 3 comprend un pont 5 ayant, à chacune de ses extrémités, une roue 7. Le pont 5 est une structure mécanique supportant les roues 7, qui inclut un arbre de transmission 50 entrainant en rotation des roues 7, et qui est également capable de modifier l'orientation des roues 7 en fonction d'une consigne de direction de l'engin 1.

L'essieu oscillant 3 est mobile en rotation autour d'un axe X3 porté par un arbre d'oscillation 52 situé au centre du pont 5. L'axe X3 est perpendiculaire à l'axe vertical de l'engin 1 et perpendiculaire à un axe central Y5 du pont 5. Lorsque le pont 5 oscille par rapport à la partie fixe 13, l'axe Y5 pivote autour de l'axe X3, comme indiqué par les flèches R1.

L'essieu oscillant 3 comporte deux vérins, respectivement un vérin gauche 9 et un vérin droit 11, dont la fonction est de contrôler l'oscillation du pont 5 et de garantir l'appui des roues 7 sur un sol S.

Chacun des vérins 9 et 11 a une tige 90 et 110 en contact avec le pont 5 et un corps 92 et 112 fixé sur la partie fixe 13 du châssis 2. Chacun des corps 92 et 112 forme une chambre 94 et 114 dans laquelle se déplace la tige 90 ou 110.

L'essieu oscillant 3 comprend un circuit hydraulique 15 équipé d'un filtre 158 et d'une source 162 de fluide sous pression. Le fluide provenant du circuit 15 est maintenu à une pression constante par l'intermédiaire d'un réducteur de pression 160 en amont des branches 15A et 15B. L'huile à pression constante, dite de gavage, alimente les chambres 94 et 114 du vérin gauche 9 et du vérin droit 11 et assure le maintien en appui des tiges 90 et 110 sur le pont 5.

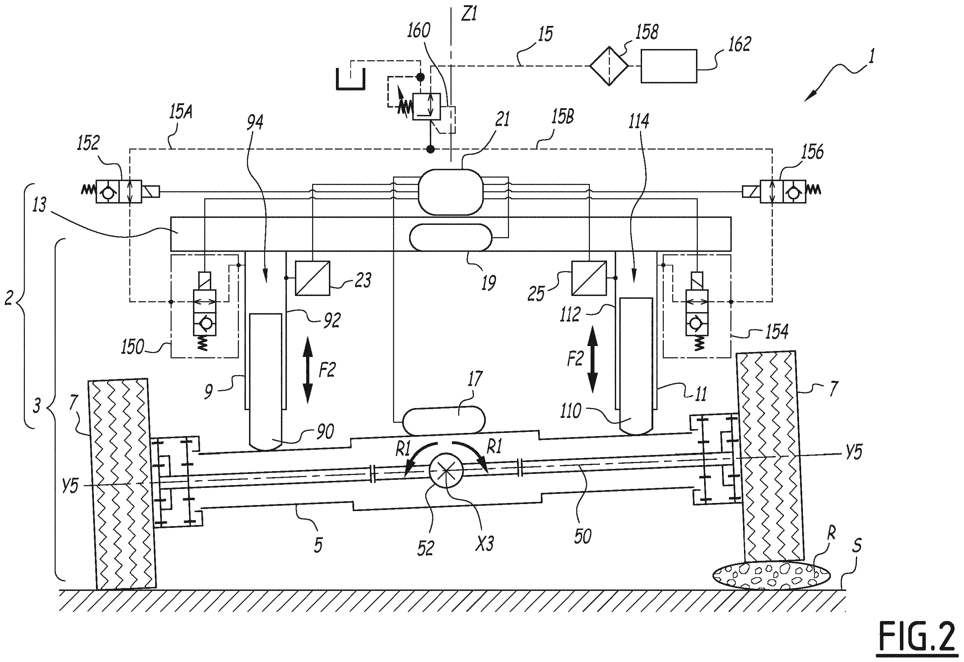

Le circuit hydraulique 15 comprend au moins une électrovanne 150 prévue sur une première branche 15A du circuit hydraulique 15 reliée à la chambre 94 du vérin gauche 9, et au moins une électrovanne 154 prévue sur une seconde branche 15B du circuit hydraulique 15 reliée à la chambre 114 du vérin droit 11. Chacune de ces électrovannes 150 et 154 peut être positionnée dans une position ouverte (figure 2), dans laquelle le fluide peut circuler librement, et une position fermée (figure 1), dans laquelle le fluide est emprisonné dans la chambre 94 ou 114 du vérin 9 ou 11 correspondant.

Sur la figure 1, les électrovannes 150 et 154 sont en position fermée : le fluide peut seulement entrer dans les chambres 94 et 114 mais ne peut pas en sortir. Sur la figure 2, les électrovannes 150 et 154 sont en position ouverte : le fluide peut librement entrer ou sortir des chambres 94 et 114. Les vérins 9 et 11 sont à simple effet.

Selon un aspect optionnel, les branches 15A et 15B peuvent comprendre chacune une électrovanne supplémentaire 152 ou 156, dont le fonctionnement est synchronisé avec celui des électrovannes 150 et 154. Ces électrovannes supplémentaires 152 et 156 apportent une redondance qui augmente la sécurité du circuit hydraulique 15.

Chacune des chambres 94 et 114 du vérin gauche 9 et du vérin droit 11 comporte un capteur de pression respectif 23 et 25 adapté pour mesurer la pression du fluide P9 ou P11 dans chacune de ces chambres 94 et 114, et l'essieu oscillant 3 comprend des moyens de contrôle reliés aux capteurs de pression 23 et 25. Ces moyens de contrôle sont formés par exemple par une unité de contrôle 21. L'unité de contrôle 21 est configurée pour détecter si la pression P9 ou P11 dans l'une des chambres 94 et 114 est supérieure à un premier seuil P1, et/ou si un différentiel ΔP entre les pressions P9 et P11 dans chacune des chambres 94 et 114 est supérieur à un second seuil P2. Si la pression P9 ou P11 est supérieure à P1 ou si le différentiel ΔP est supérieur à P2, cela dénote le blocage en position fermée d'une des électrovannes 150 et 154. Dans un tel cas, l'unité de contrôle 21 est configurée pour déclencher une procédure de sécurisation.

L'unité de contrôle 21 est également reliée aux électrovannes 150, 152, 154 et 156 et exerce un contrôle électrique de ces électrovannes. Les électrovannes 150, 152, 154 et 156 sont par défaut maintenues en position fermée par des ressorts. Le contrôle électrique exercé par l'unité de contrôle 21 consiste à les alimenter en courant électrique pour les faire passer en position ouverte.

L'essieu oscillant 3 comporte également un capteur d'inclinaison 17 fixé au pont 5 et un capteur d'inclinaison 19 fixé à la partie fixe 13. Les inclinaisons mesurées par les capteurs 17 et 19 sont communiquées à l'unité de contrôle 21 et permettent de connaitre l'inclinaison du pont 5 par rapport à la partie fixe 13.

L'unité de contrôle 21 est configurée pour émettre un signal d'alerte à destination d'un opérateur ou aux alentours de l'engin de levage 1 en cas de dépassement de l'un des seuils P1 et P2. Par exemple, l'unité de contrôle 21 peut commander un système sonore de l'engin de levage 1 pour émettre un signal d'avertissement dans une plateforme accueillant des opérateurs, ou bien des systèmes sonores sur une partie basse à destination de personnels à proximité. Le signal d'alerte peut également être un message d'erreur sur un écran.

L'unité de contrôle 21 est également configurée pour inhiber certaines fonctionnalités de l'engin de levage 1. Par exemple, l'unité de contrôle 21 est reliée à un contrôleur général non représenté de l'engin de levage et peut transmettre des signaux de réduction de la vitesse de déplacement atteignable ou bien des signaux de réduction de l'amplitude de déplacement de certains tronçons de la structure élévatrice, voire inhiber totalement l'élévation.

L'essieu oscillant 3, et par extension l'engin de levage 1, fonctionnent de la façon suivante.

Dans une première configuration verrouillée représentée à la figure 1, les électrovalves 150, 152, 154 et 156 sont non alimentées. Les électrovannes sont donc en position fermée, le fluide ne peut donc pas s'échapper des chambres 94 et 114. Les vérins 9 et 11 sont donc bloqués, comme cela est indiqué par les doubles flèches F1 barrées à la figure 1, et l'essieu oscillant 3 est donc verrouillé.

La pression de gavage est utilisée dans le circuit hydraulique 15 pour maintenir les vérins 9 et 11 en appui sur le pont 5. Les électrovannes sont toujours passantes dans le sens de l'alimentation des vérins 9 et 11, quel que soit leur état (alimentées ou non).

En cas de déplacement au sol de l'engin de levage 1 avec l'essieu 3 verrouillé, les capteurs d'angle 17 (essieu) et 19 (châssis) n'évoluent pas l'un par rapport à l'autre ou bien toujours dans le même sens.

Cette configuration verrouillée est adaptée au stationnement ou aux phases d'élévation de la structure élévatrice.

Dans une deuxième configuration « semi-verrouillée », il est possible de n'autoriser l'oscillation de l'essieu que dans le sens stabilisant pour le châssis (retour vers la position dévers 0°). L'unité de contrôle 21 est ainsi capable de piloter séparément les électrovannes 150/152 et 154/156 en fonction des données renvoyées par les capteurs d'inclinaison 17 et 19. Les électrovannes peuvent alors être fermées pour bloquer l'un des vérins 9 ou 11 de telle manière que l'inclinaison ne puisse être augmentée.

Dans une troisième configuration déverrouillée représentée à la figure 2, Les électrovannes sont alimentées électriquement et donc ouvertes. Le fluide peut librement entrer et sortir des chambres 94 et 114 : les vérins 9 et 11 sont libres en translation, comme cela est indiqué par les doubles flèches F2 à la figure 2. L'essieu oscillant 3 est donc déverrouillé, ce qui signifie que l'essieu suit les irrégularités de terrain, par exemple un rocher R entraîne une inclinaison du pont 5 par rapport à la partie fixe 13.

En cas de déplacement au sol avec l'essieu déverrouillé, les mesures des capteurs d'inclinaison 17 et 19 évoluent les unes par rapport aux autres.

Les deux chambres 94 et 114 sont reliées ensemble à la même pression. Les capteurs 23 et 25 indiquent des pressions P9 et P11 identiques proches de celle utilisée pour gaver les vérins 9 et 11.

Dans cette configuration, les pressions P9 et P11 sont analysées par l'unité de contrôle 21, par exemple pendant une phase de roulage de l'engin de levage 1 et préalablement à une élévation de la structure élévatrice.

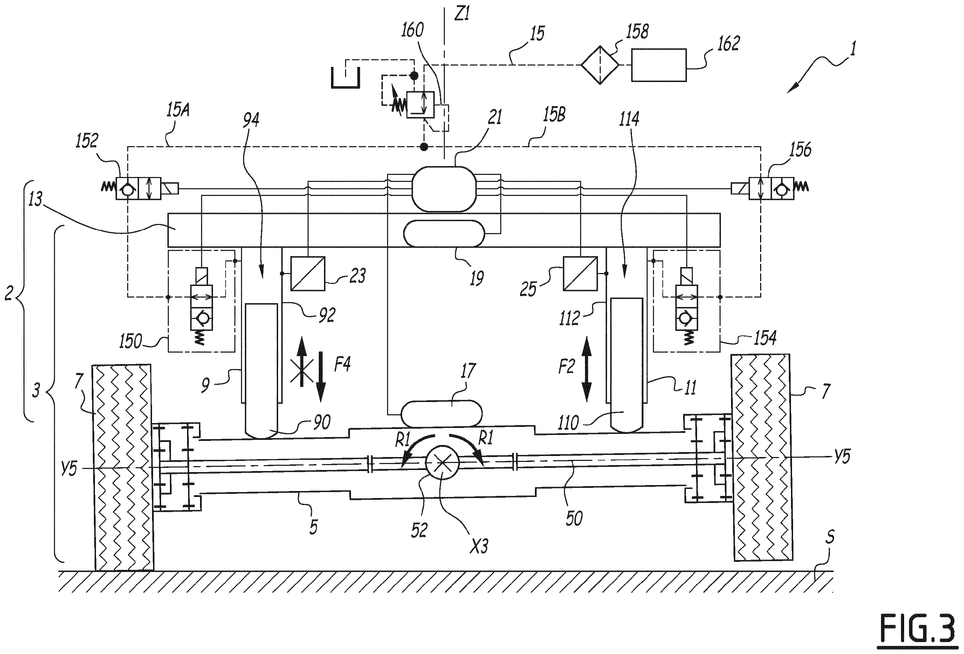

A la figure 3, un dysfonctionnement survient en configuration déverrouillée. Les électrovannes sont normalement alimentées et en position ouvertes. Cependant, l'électrovanne 152 est restée bloquée en position fermée (défaut d'alimentation électrique ou tiroir restant bloqué lorsque, par exemple, un couple de serrage trop fort est appliqué lors du montage de l'électrovanne dans sa cavité).

Le fluide est alors emprisonné dans la chambre 94, et le vérin 9 reste donc bloqué alors que l'engin de levage 1 est potentiellement sur un terrain irrégulier, ou bien revient sur un terrain régulier après avoir rencontré une irrégularité. L'essieu 3 ne peut plus osciller que dans un seul sens ce qui risque de générer une perte de contact d'une des roues 7 avec le sol. Dans le cas de la figure 3, l'orientation du pont 5 par rapport au sol nécessiterait une rotation dans le sens horaire pour que la roue droite puisse à nouveau contacter le sol. Or le vérin 9 est bloqué dans le sens de la rétraction, comme indiqué par la flèche barrée F3 vers le haut. Cette rotation ne peut avoir lieu et la roue droite reste surélevée, générant une perte de contact avec le sol. Le vérin 9 peut seulement sortir, selon la flèche F4 vers le bas, ce qui aggraverait le déséquilibre. Si l'engin de levage 1 s'arrêtait à ce moment et entamait une phase d'élévation, un danger de déstabilisation et de renversement surviendrait.

Dans ce cas de défaillance, les capteurs de pression 23 et 25 indiquent des pressions P9 et P11 différentes pendant la phase de déplacement. Le capteur 23 va notamment mesurer une pression P9 supérieure à la pression de gavage normalement mesurée, car le fluide enfermé dans la chambre 94 ne peut plus s'échapper et la pression augmente sous l'effet de la force exercée par le pont 5 sur la tige 90 pour la faire rentrer dans la chambre 94. La défaillance est donc détectée soit par la pression P9 supérieure au premier seuil P1, soit par le dépassement du second seuil P2 par le différentiel de pression ΔP. Le seuil de pression P1 peut être, à titre d'exemple, égal à 25 bar, et le seuil de différentiel de pression P2 peut être, à titre d'exemple, égal à 15 bar. Le seuil de pression P1 peut être dépendant de la pression de gavage. Plus généralement, le seuil de pression P1 est forcément supérieur à la pression de gavage, par exemple fixé à la pression de gavage + 10 bar.

L'unité de contrôle 21 peut également mesurer le temps pendant lequel le dépassement du seuil se produit. Par exemple si le dépassement du seuil ne dépasse pas une durée de 25 ms, le dépassement peut ne pas être pris en compte.

Cette détection d'une défaillance permet de s'assurer du fonctionnement correct de l'essieu oscillant 3 pendant la phase de déplacement préalablement à une phase d'élévation. En cas de détection d'une anomalie pendant la phase de déplacement, l'élévation sur roues est interdite et un défaut est remonté à l'opérateur ainsi que dans le diagnostic machine. Ainsi, la défaillance est détectée et signalée avant que celle-ci ne puisse entraîner de conséquences dangereuses.

## Revendications

1. Essieu oscillant (3) pour un engin de levage (1), cet essieu comprenant :
un pont d'essieu (5) aux extrémités duquel sont montées deux organes de liaison au sol (7) ;
un axe d'oscillation (X3) ;
un vérin gauche (9) et un vérin droit (11), chaque vérin (9, 11) ayant une tige (90, 110) en contact avec le pont (5) et un corps (92, 112) fixé sur une partie fixe (13) d'un châssis (2) de l'engin de levage (1), le corps (92, 112) formant une chambre (94, 114) dans laquelle se déplace la tige (90, 110), un circuit hydraulique (15) reliant entre elles les chambres (94, 114) des vérins gauche (9) et droit (11), dans lequel est présent un fluide à une pression donnée, permettant de presser les tiges (90, 110) du vérin gauche (9) et du vérin droit (11) contre le pont (5) ;
au moins une électrovanne (150, 152) sur une branche (15A) du circuit hydraulique (15) reliée à la chambre (94) du vérin gauche (9), et au moins une électrovanne (154, 156) sur une branche (15B) du circuit hydraulique (15) reliée à la chambre (114) du vérin droit (11), chacune de ces électrovannes (150, 152, 154, 156) pouvant être positionnée dans une position ouverte, dans laquelle le fluide peut circuler librement, et une position fermée, dans laquelle le fluide est emprisonné dans la chambre (94, 114) du vérin (9, 11) correspondant, chacune des chambres (94, 114) du vérin gauche (9) et du vérin droit (11) comportant un capteur de pression (23, 25) adapté pour mesurer la pression (P9, P11) du fluide dans chacune des chambres (94, 114), et des moyens de contrôle (21) étant prévus pour détecter une pression dans l'une des chambres (94, 114), **caractérise en ce que** les moyens de contrôle (21) sont prévus pour détecter une pression dans l'une des chambres (94, 114) supérieure à un premier seuil (P1), et/ou un différentiel (ΔP) entre les pressions dans chacune des chambres (94, 114) supérieur à un second seuil (P2), de manière à détecter le blocage en position fermée d'une électrovanne (150, 152, 154, 156), et à déclencher une procédure de sécurisation.

2. Essieu oscillant selon la revendication 1, **caractérisé en ce que** les moyens de contrôle (21) sont configurés pour émettre un signal d'alerte à destination d'un opérateur ou aux alentours de l'engin de levage (1) en cas de dépassement de l'un des seuils de pression (P1, P2).

3. Essieu oscillant selon l'une des revendications précédentes, **caractérisé en ce que** les moyens de contrôle (21) sont configurés pour inhiber certaines fonctionnalités de l'engin de levage (1).

4. Essieu oscillant selon l'une des revendications précédentes, **caractérisé en ce que** les pressions dans les chambres (94, 114) des vérins (9, 11) sont détectées pendant une phase de roulage de l'engin de levage (1) et préalablement à une phase d'élévation de l'engin de levage (1).

5. Engin de levage (1) comprenant au moins un essieu oscillant (3) selon l'une des revendications précédentes.

6. Procédé de contrôle d'un engin de levage (1) comportant au moins un essieu oscillant (3), cet essieu oscillant (3) comprenant :
un pont d'essieu (5) ayant une roue (7) à chacune de ses extrémités,
un axe d'oscillation (X3),
un vérin gauche (9) et un vérin droit (11) ; chacun des vérins gauche (9) et droit (11) ayant une tige (90, 110) en contact avec le pont (5) et un corps (92, 112) fixé sur un châssis (2) de l'engin de levage (1), le corps (92, 112) formant une chambre (94, 114) dans laquelle se déplace la tige (90, 110) ; un circuit hydraulique (15) reliant entre elles les chambres (94, 114) des vérins gauche (9) et droit (11), dans lequel est présent un fluide à une pression donnée, permettant de presser les tiges (90, 110) du vérin gauche (9) et du vérin droit (11) contre le pont (5);
au moins une électrovanne (150, 152) sur une branche (15A) du circuit hydraulique (15) reliée à la chambre (94) du vérin gauche (9), et au moins une électrovanne (154, 156) sur une branche (15B) du circuit hydraulique (15) reliée à la chambre (114) du vérin droit (11), chacune de ces électrovannes (150, 152, 154, 156) pouvant être positionnée dans une position ouverte, dans laquelle le fluide peut circuler librement, et une position fermée, dans laquelle le fluide est emprisonné dans la chambre du vérin (9, 11) correspondant, le procédé comportant une étape a) consistant à mesurer la pression du fluide (P9, P11) dans chacune des chambres (94, 114) du vérin gauche (9) et du vérin droit (11),
le procédé étant **caractérisée par** une étape b) consistant à déterminer si la pression dans l'une des chambres (94, 114) est supérieure à un premier seuil (P1), et/ou si un différentiel (ΔP) entre les pressions dans chacune des chambres (94, 114) est supérieur à un second seuil, signalant le blocage en position fermée d'une électrovanne (150, 152, 154, 156), et c) à déclencher une procédure de sécurisation en cas de survenance de l'un des cas de l'étape b).

7. Procédé selon la revendication 6, **caractérisé en ce que** les étapes a) et b) sont réalisées pendant une phase de roulage de l'engin de levage (1) et préalablement à une phase d'élévation.

8. Procédé selon l'une des revendications 6 et 7, **caractérisé en ce qu'**à l'étape c), la procédure de sécurisation consiste au moins à : émettre un signal d'alerte à destination d'un opérateur ou aux alentours de l'engin de levage (1), ou inhiber certaines fonctionnalités de l'engin de levage (1).

## Patentansprüche

1. Pendelachse (3) für eine Hubmaschine (1), diese Achse umfassend:
eine Achsbrücke (5), an deren Enden zwei Bodenverbindungsglieder (7) montiert sind;
eine Schwenkachse (X3);
einen linken Zylinder (9) und einen rechten Zylinder (11), wobei jeder Zylinder (9, 11) eine Stange (90, 110) in Kontakt mit der Brücke (5) und einen Körper (92, 112), der an einem festen Teil (13) eines Rahmens (2) der Hubmaschine (1) befestigt ist, aufweist, wobei der Körper (92, 112) eine Kammer (94, 114) bildet, in der sich die Stange (90, 110) bewegt, einen Hydraulikkreis (15), der den linken (9) und den rechten (11) Zylinder, in denen ein Fluid mit einem gegebenen Druck vorhanden ist, der es ermöglicht, die Stangen (90, 110) des linken Zylinders (9) und des rechten Zylinders (11) gegen die Brücke (5) zu pressen, zwischen den Kammern (94, 114) miteinander verbindet;
mindestens ein Magnetventil (150, 152) an einem Zweig (15A) des Hydraulikkreises (15), der mit der Kammer (94) des linken Zylinders (9) verbunden ist, und mindestens ein Magnetventil (154, 156) an einem Zweig (15B) des Hydraulikkreises (15), der mit der Kammer (114) des rechten Zylinders (11) verbunden ist, wobei jedes dieser Magnetventile (150, 152, 154, 156) in eine offene Stellung, in der das Fluid frei fließen kann, und eine geschlossene Stellung, in der das Fluid in der Kammer (94, 114) des entsprechenden Zylinders (9, 11) eingeschlossen ist, positioniert werden kann,
wobei jede der Kammern (94, 114) des linken Zylinders (9) und des rechten Zylinders (11) einen Drucksensor (23, 25) umfasst, der geeignet ist, um den Druck (P9, P11) des Fluids in jeder der Kammern (94, 114) zu messen, und wobei Steuereinrichtungen (21) bereitgestellt sind, um Folgendes zu erfassen
einen Druck in einer der Kammern (94, 114), **dadurch gekennzeichnet, dass** die Steuereinrichtungen (21) bereitgestellt sind, um einen Druck in einer der Kammern (94, 114), der höher als ein erster Schwellenwert (P1) ist, und/oder einen Unterschied (ΔP) zwischen den Drücken in jeder der Kammern (94, 114), der höher ist als ein zweiter Schwellenwert (P2), zu erfassen, um die Blockierung eines Magnetventils (150, 152, 154, 156) in geschlossener Stellung zu erfassen und ein Sicherheitsverfahren auszulösen.

2. Pendelachse nach Anspruch 1, **dadurch gekennzeichnet, dass** die Steuereinrichtungen (21) konfiguriert sind, um bei Überschreitung eines der Druckschwellenwerte (P1, P2) ein Warnsignal an einen Bediener oder an die Umgebung der Hubmaschine (1) auszugeben.

3. Pendelachse nach einem der vorherigen Ansprüche, **dadurch gekennzeichnet, dass** die Steuereinrichtungen (21) konfiguriert sind, um bestimmte Funktionen der Hubmaschine (1) zu sperren.

4. Pendelachse nach einem der vorherigen Ansprüche, **dadurch gekennzeichnet, dass** die Drücke in den Kammern (94, 114) der Zylinder (9, 11) während einer Rollphase der Hubmaschine (1) und vor einer Hubphase der Hubmaschine (1) erfasst werden.

5. Hubmaschine (1), umfassend mindestens eine Pendelachse (3) nach einem der vorherigen Ansprüche.

6. Verfahren zum Steuern einer Hubmaschine (1), umfassend mindestens eine Pendelachse (3), diese Pendelachse (3) umfassend:
eine Achsbrücke (5), die ein Rad (7) an jedem ihrer Enden aufweist, eine Schwenkachse (X3),
einen linken Zylinder (9) und einen rechten Zylinder (11); wobei jeder von dem linken (9) und rechten (11) Zylinder eine Stange (90, 110), die mit der Brücke (5) in Kontakt steht, und einen Körper (92, 112) der an einem Rahmen (2) der Hubmaschine (1) befestigt ist, aufweist, wobei der Körper (92, 112) eine Kammer (94, 114) bildet, in der sich die Stange (90, 110) bewegt, einen Hydraulikkreis (15), der den linken (9) und den rechten (11) Zylinder, in denen ein Fluid mit einem gegebenen Druck vorhanden ist, der es ermöglicht, die Stangen (90, 110) des linken Zylinders (9) und des rechten Zylinders (11) gegen die Brücke (5) zu pressen, zwischen den Kammern (94, 114) miteinander verbindet;
mindestens ein Magnetventil (150, 152) an einem Zweig (15A) des Hydraulikkreises (15), der mit der Kammer (94) des linken Zylinders (9) verbunden ist, und mindestens ein Magnetventil (154, 156) an einem Zweig (15B) des Hydraulikkreises (15), der mit der Kammer (114) des rechten Zylinders (11) verbunden ist, wobei jedes dieser Magnetventile (150, 152, 154, 156) in eine offene Stellung, in der das Fluid frei fließen kann, und eine geschlossene Stellung, in der das Fluid in der Kammer des entsprechenden Zylinders (9, 11) eingeschlossen ist, positioniert werden kann,
wobei das Verfahren einen Schritt a) umfasst, der darin besteht, den Druck des Fluids (P9, P11) in jeder der Kammern (94, 114) des linken Zylinders (9) und des rechten Zylinders (11) zu messen, wobei das Verfahren durch einen Schritt b) gekennzeichnet ist, der darin besteht, zu bestimmen, ob der Druck in einer der Kammern (94, 114) größer ist als ein erster Schwellenwert (P1), und/oder ob ein Differential (ΔP) zwischen den Drücken in jeder der Kammern (94, 114) größer ist als ein zweiter Schwellenwert, der die Blockierung eines Magnetventils (150, 152, 154, 156) in geschlossener Stellung signalisiert, und c) ein Sicherheitsverfahren bei Auftreten eines der Fälle von Schritt b) auszulösen.

7. Verfahren nach Anspruch 6, **dadurch gekennzeichnet, dass** die Schritte a) und b) während einer Rollphase der Hubmaschine (1) und vor einer Hubphase durchgeführt werden.

8. Verfahren nach einem der Ansprüche 6 und 7, **dadurch gekennzeichnet, dass** in Schritt c) das Sicherheitsverfahren mindestens aus Folgendem besteht: Ausgeben eines Warnsignals an einen Bediener oder an die Umgebung der Hubmaschine (1) oder Sperren bestimmter Funktionen der Hubmaschine (1).

## Claims

1. Oscillating axle (3) for a lifting device (1), wherein this axle comprises:
- an axle bridge (5) at the ends of which are mounted two members (7) contacting the ground;
- an axis of oscillation (X3);
- a left jack (9) and a right jack (11), each jack (9, 11) having a rod (90, 110) in contact with the bridge (5) and a body (92, 112) fixed on a fixed part (13) of a chassis (2) of the lifting device (1), wherein the body (92, 112) forms a chamber (94, 114) in which the rod (90, 110) moves,
- a hydraulic circuit (15) interconnecting the chambers (94, 114) of the left jack (9) and right jack (11), in which a fluid is present at a given pressure, making it possible to press the rods (90, 110) of the left jack (9) and right jack (11) against the bridge (5);
- at least one solenoid valve (150, 152) on a branch (15A) of the hydraulic circuit (15) connected to the chamber (94) of the left jack (9), and at least one solenoid valve (154, 156) on a branch (15B) of the hydraulic circuit (15) connected to the chamber (114) of the right jack (11), each of these solenoid valves (150, 152, 154, 156) being able to be positioned in an open position, in which the fluid may circulate freely, and a closed position, in which the fluid is trapped in the chamber (94, 114) of the corresponding jack (9, 11),
each of the chambers (94, 114) of the left jack (9) and of the right jack (11) comprising a pressure sensor (23, 25) designed to measure the pressure (P9, P11) of the fluid in each of the chambers (94, 114), and control means (21) being provided to detect a pressure in one of the chambers (94, 114)
**characterized in that** the control means (21) are provided to detect that a pressure in one of the chambers (94, 114) is greater than a first threshold (P1), and/or a differential (ΔP) between the pressures in each of the chambers (94, 114) that is greater than a second threshold (P2), so as to detect the blocking in the closed position of a solenoid valve (150, 152, 154, 156), and initiate a security procedure.

2. Oscillating axle according to claim 1, **characterized in that** the control means (21) are designed to emit an alert signal to an operator or the surroundings of the lifting device (1) in the event of exceeding one of the pressure thresholds (P1, P2).

3. Oscillating axle according to one of the preceding claims, **characterized in that** the control means (21) are designed to inhibit certain functions of the lifting device (1).

4. Oscillating axle according to one of the preceding claims, **characterized in that** the pressures in the chambers (94, 114) of the jacks (9, 11) are detected during a rolling phase of the lifting device (1) and prior to a lifting phase of the lifting device (1).

5. Lifting device (1) comprising at least one oscillating axle (3) according to one of the preceding claims.

6. Method for controlling a lifting device (1) comprising at least one oscillating axle (3), wherein this oscillating axle (3) comprises:
- an axle bridge (5) having a wheel (7) at each of its ends,
- an axis of oscillation (X3),
- a left jack (9) and a right jack (11); each of the left (9) and right (11) jacks having a rod (90, 110) in contact with the bridge (5) and a body (92, 112) fixed on a chassis (2) of the lifting device (1), the body (92, 112) forming a chamber (94, 114) in which the rod (90, 110) moves;
- a hydraulic circuit (15) interconnecting the chambers (94, 114) of the left (9) and right (11) jacks, in which a fluid is present at a given pressure, making it possible to press the rods (90, 110) of the left jack (9) and right jack (11) against the bridge (5);
- at least one solenoid valve (150, 152) on a branch (15A) of the hydraulic circuit (15) connected to the chamber (94) of the left jack (9), and at least one solenoid valve (154, 156) on a branch (15B) of the hydraulic circuit (15) connected to the chamber (114) of the right jack (11), each of these solenoid valves (150, 152, 154, 156) being able to be positioned in an open position, in which the fluid may circulate freely, and a closed position, in which the fluid is trapped in the chamber of the corresponding jack (9, 11),
the method comprising a step a) consisting in measuring the pressure of the fluid (P9, P11) in each of the chambers (94, 114) of the left jack (9) and of the right jack (11),
the method being **characterized by** a step b) consisting in determining whether the pressure in one of the chambers (94, 114) is greater than a first threshold (P1), and/or whether a differential pressure (ΔP) between the pressures in each of the chambers (94, 114) is greater than a second threshold, signaling the blocking in the closed position of a solenoid valve (150, 152, 154, 156), and c) initiating a safety procedure in the event of one of the cases of step b) occurring.

7. Method according to claim 6, **characterized in that** the steps a) and b) are carried out during a rolling phase of the lifting device (1) and prior to a lifting phase.

8. Method according to one of claims 6 and 7, **characterized in that** in step c), the safety procedure consists at least in: transmitting an alert signal to an operator or the surroundings of the lifting device (1), or inhibiting certain functions of the lifting device (1).
